| (19) | Europäisches Patentamt<br>European Patent Office<br>Office européen des brevets | (11) | **EP 1 448 492 B1** |
|---|---|---|---|

## (12) EUROPEAN PATENT SPECIFICATION

(45) Date of publication and mention
of the grant of the patent:
**18.01.2006 Bulletin 2006/03**

(21) Application number: **02701462.0**

(22) Date of filing: **11.02.2002**

(51) Int Cl.:
**C04B 7/24** *(2006.01)*  **C04B 7/147** *(2006.01)*

(86) International application number:
**PCT/HU2002/000011**

(87) International publication number:
**WO 2003/045868 (05.06.2003 Gazette 2003/23)**

(54) **ADDITIVE MIXTURE FOR CEMENT CLINKER PRODUCTION AND ITS USE**

ADDITIVMISCHUNG ZUM HERSTELLEN VON ZEMENTKLINKER UND DEREN VERWENDUNG

MELANGE ADDITIF POUR LA PRODUCTION DE SCORIES DE CIMENT ET UTILISATION

(84) Designated Contracting States:
**AT DE**
Designated Extension States:
**LT LV RO SI**

(30) Priority: **29.11.2001 HU 0105198**

(43) Date of publication of application:
**25.08.2004 Bulletin 2004/35**

(73) Proprietor: **Duna-Drava Cement KFT**
**2600 Vac (HU)**

(72) Inventors:
• **SAS, László**
**H-2131 Göd (HU)**
• **SZABo, László**
**H-1133 Budapest (HU)**

• **SZARKANDI, János;**
**H-2626 Nagymaros (HU)**

(74) Representative: **von Füner, Nicolai et al**
**v. Füner Ebbinghaus Finck Hano**
**Patentanwälte**
**Mariahilfplatz 2&3**
**81541 München (DE)**

(56) References cited:
**EP-A- 0 382 673      WO-A-94/29231**
**DE-A- 3 409 650      US-A- 5 078 593**
**US-A- 5 421 880**

• **DATABASE WPI Week 198829 Derwent**
**Publications Ltd., London, GB; AN 1988-201701**
**XP002208515 & JP 63 139038 A (NIPPON**
**JIRYOKU SENKO)**

EP 1 448 492 B1

**EP 1 448 492 B1**

**Description**

The invention relates to an additive mixture adaptable to the raw material matrix of cement clinker production and to its use.

As an additive of cement clinker production there is a tendency of utilizing certain wastes continuously formed in the industry. In the course of the utilization only wastes can be used which do not have a disadvantageous affect on the composition of cement clinker.

It is known that in the course of producing so-called "furnace flour" (feedstock), which is the basic material of clinker burning, balanced chemical composition, the most perfect homogeneity possible and high grinding fineness are important aspects. These factors influence the specific heat consumption and efficiency of clinker burning. It can also be stated that if solid wastes the grain size of which is less fine than the grain size range of the feedstock are entered into the furnace, it decreases the efficiency of burning as well as the quality of the produced clinker.

US Patent No. 5,421,880 deals with the utilization of slag formed in producing steel in clinker production. The chemical composition of slag formed in steel production is similar to that of the raw materials of cement clinker, and so there is a possibility to add this slag into the clinker burning furnace without fine grinding, together with the furnace flour and to make use of the advantages resulted by this.

The use of converter slag formed in producing steel in cement clinker industry has come into the foreground first of all because they are trying to process it because of the large space demand of slag dumps. The industrial value of the slag is restricted due to its low iron oxide content and its hardness. The advantage of using converter slag in clinker burning is that when it melts at a temperature of about 1,300 °C, it takes part in the clinker forming processes, in the production of the melt phase, but increasing the quantity of melt it may be unfavourable for the operation of a clinkering furnace before the clinkering zone.

On the other hand wastes formed in mineral oil industry, materials containing such waste and the remnants of such materials, such as freshly formed hydrocarbon based wastes are mostly of a sludgy, sticky texture in their external appearance, they contain various amounts of mechanical pollution of different chemical compositions. Such wastes are wastes deriving from crude oil refining such as acid resin, and wastes deriving from natural gas cleaning and the pyrolytic treatment of mineral carbon, sludge deriving from the operation and maintenance activity, wastes deriving from sand removal, tank bottom sludge, used adsorption clay, acidic and other tar, and even tar or asphalt wastes deriving from organic chemistry processes.

A problem of mineral oil industry is to process the above wastes created in large quantities or materials containing such wastes in an efficient and possibly environmental friendly way and to omit their storage dumps. It is obvious that the separate elimination of dangerous and/or environment polluting wastes in waste burning furnaces built or operated especially for this purpose in mineral oil industry involves extremely high costs. There is a limited possibility for maintaining dumps and establishing new dumps in accordance with the prescriptions of environmental protection, because of the extra costs involved.

Mineral oil industry wastes or materials containing such wastes cannot be directly mixed with the raw materials used in clinker burning, because in the dry, half-dry or wet system clinker burning furnaces the preheating of the raw materials is carried out with the exhaust gases coming from the opposite direction, so before the burning temperature is reached a significant amount of unburned hydrocarbon derivatives is moved from the material containing mineral oil industry waste. This is why the utilization of mineral oil industry wastes or materials containing such materials in a clinker-burning furnace could only be realized through a separate feeding system, at a temperature of about 1,000 °C.

WO 94/29231 PCT Published Application pertains to a method for burning sludge or filter cakes during the cement clinker manufacturing. On accomplishing the method it is necessary to dry the sludge prior to burning. The drying of the sludge is performed by means of heat from preheated or calcined raw meal having a temperature of about 740-880 °C which is mixed with the sludge in a separate drier unit. It is clear that without drying of the sludge the burning thereof cannot be accomplished.

As the utilization of mineral oil industry wastes disturbs the operation of the clinker-burning furnace, the cement industry has not dealt with burning mineral oil industry wastes.

The object of the invention is to make mineral oil wastes listed above of various chemical compositions and different textures and materials containing such wastes suitable for being continuously fed at the gates of cement rotary furnaces operated with dry, half-dry or wet technology. This object can be solved by using one or more carriers, which can be regarded as wastes difficult to utilize. Among these wastes converter slag created continuously or obtained from dumps was found as a suitable carrier, because it has a balanced chemical composition, it can be fed easily, it does not tend to stick, it has a low moisture content, its chemical composition is similar to that of the melt phase of clinker minerals, its melting temperature is around 1,300 °C, and its volatile matter content is minimal. Converter slag and mineral oil industry wastes or materials containing such materials can also be mixed with other wastes called as conditioning agents, if required. With conditioning agents favourable feeding characteristics can be achieved

The additive mixture adaptable to the raw material matrix (composition) of cement clinker production according to the invention is a mixture of slag formed in the course of producing pig-iron and steel, favourable converter slag and hydrocarbon based wastes deriving from mineral oil industry or materials containing such wastes, and optionally conditioning agents, of a maximum grain size of 20 mm.

The additive mixture contains 40-98 weight % of slag formed in the course of producing pig iron and steel, 2-60 weight % of waste of mineral oil industry origin or material containing such waste and 0-5 weight % of conditioning agent.

The chemical composition of the burning residue of the additive mixture according to the invention can be within the following limits:

| | |
|---|---|
| $SiO_2$ | 10-60 weight % |
| $Al_2O_3$ | 2-20 weight% |
| $Fe_2O_3$ | 10-60 weight% |
| CaO | 15-70 weight%. |

The chemical compostion of the burning residue of the components suitable to be used as converter slag can be within the following limits:

| | |
|---|---|
| $SiO_2$ | 15-23 weight% |
| $Al_2O_3$ | 1- 8 weight% |
| $Fe_2O_3$ | 13-27 weight% |
| CaO | 38-55 weight% |
| Burning loss: | 1- 5 weight%. |

Wastes deriving from crude oil refining may be for example acid resin and wastes deriving from natural gas cleaning and from the pyrolytic treatment of mineral carbon, among others sludge deriving from operating and maintaining activity, synthetic insulating and heat-conducting oils, oil wastes, wastes deriving from sand removal in a desander, solid materials and sludge deriving from oil or water separators, or grease and oil mixtures, wastes deriving from cleaning of transportation and storage tanks containing oil, tank bottom sludge, adsorption clay with mineral oil content, acidic and other tar and types of tar, wastes deriving from organic chemistry processes, building and demolition wastes, asphalt with or without tar content, distillation residues and reaction residues or materials containing such wastes.

In the desired case the feedable consistency of converter slag and the above wastes deriving from crude oil refining, natural gas cleaning or the pyrolytic treatment of mineral carbon or materials containing such wastes can be set or regulated or ameliorated with materials added to the mixture of the above components hereinafter referred to as conditioning agents. These conditioning agents may be cut up packaging materials, impregnating materials, wipe cloths, filter materials and protective clothing, wood such as polluted sawdust or cuttings, paper and cardboard, composite packaging materials of various compositions, wastes deriving from the research, mining, enrichment and other processing of minerals and from quarrying, wastes deriving from waste processing facilities, sewage plants and water supply industry, exhausted catalytic converters, used activated carbon, excavated soil and stone waste, filter cakes, charged or discharged ion-exchange resin. The grain size of the conditioning agents is set in accordance with the requirements.

Generally the additive mixture for use in cement clinker production can be produced by mixing the individual components. In the raw material composition of the residue of the additive mixture the CaO, $SiO_2$, $Fe_2O_3$ and $Al_2O_3$ content is changed to a maximum extent of $\pm 10$ weight% in a given case of cement clinker production.

Wastes deriving from refining crude oil with soluble acid content, e.g.: acid resin, is neutralized before use.

The received mixture is used so that it is fed into the cement clinker burning furnace in 1-15 weight% calculated on the weight of the clinker, at the section of the furnace where the temperature is equivalent to 1,050-1,150 °C flue-gas temperature, added to furnace flour of a temperature of about 800-850 °C. The feeding is realized through cellular feeder or conveying screw.

The advantages of the produced additive mixture are mainly due to double waste utilization, and further advantages can also be taken into consideration, which are summarized below:

- the energy content of the mineral oil in the additive mixture is sufficient to heat up the burning residue of the additive mixture fed through the furnace gates to actual furnace temperature, but the amount of heat achieved by this does not affect the heat balance of the furnace,

- by adding the additive mixture the transformation of the converted slag components into melt phase can be delayed in the course of burning the clinker; the formed melt enters into chemical reaction with the ash content of the mineral oil industry waste or with the hot furnace flour, and uncovering its elements it helps the formation of clinker minerals, reducing by this the unfavourable inclusion-forming tendency of the ash content of the mineral oil industry waste,

- the additive mixture is transportable on a conveyor belt, it does not stick in the chute and it can be fed into the furnace through the usual feeding systems such as a cellular feeder or conveying screw,
- at the place of feeding the additive mixture exerts auxiliary burner properties, and by this a split heating system is formed, the $No_x$ emission of the furnace decreases as a result of the reduction of the high temperature $NO_x$ formed in the main burner,
- as a result of the fact that the additive mixture can be fed continuously, balanced, homogenous clinker quality can be achieved

With respect to the use of the additive mixture the following is presented for illustration:

The composition of the furnace flour used in the clinker burning furnace - without the additive mixture - is the following:

| Burning loss | 34.92 | - |
|---|---|---|
| $SiO_2$ | 14.47 | 22.23 |
| $Al_2O_3$ | 3.34 | 5.13 |
| $Fe_2O_3$. | 2.22 | 3.41 |
| CaO | 43.16 | 66.32 |

$$\text{Silicate modulus (SM)} \quad \frac{SiO_2}{Al_2O_3 + Fe_2O_3} \qquad 2.6$$

$$\text{Aluminate modulus (AM)} \quad \frac{Al_2O_3}{Fe_2O_3} \qquad 1.5$$

$$\text{Lime-standard (LS)} \quad \frac{100\ CaO}{2.8\ SiO_2 + 1.18\ Al_2O_3 + 0.65\ Fe_2O_3} \quad 94$$

$$\text{(Lime saturation)}$$

The chemical composition of the furnace flour is set as below, if the chemical composition of the burning residue (ash content) of the additive mixture is the following:

Chemical composition of the additive mixture:

| Burning loss | 0 weight% |
|---|---|
| $SiO_2$ | 37.5 weight% |
| $Al_2O_3$ | 5.37 weight% |
| $Fe_2O_3$ | 16.78 weight% |
| CaO | 25.15 weight% |
| MgO | 7.05 weight% |
| $SO_3$ | 1.21 weight% |

Using 3.4 weight% of additive mixture and then 11.5 weight% of additive mixture calculated on the weight of the clinker the following clinker composition was received:

| | from furnace flour (feedstock) | | from additive mixture | | clinker weight% |
|---|---|---|---|---|---|
| $SiO_2$ | 20.88 | + | 1.26 | = | 22.14 |
| $Al_2O_3$ | 4.93 | + | 0.18 | = | 5.11 |

Table continued

| from furnace flour (feedstock) | | from additive mixture | | clinker weight% | |
|---|---|---|---|---|---|
| Fe$_2$O$_3$ | 2.83 | + | 0.57 | = | 3.40 |
| CaO | 65.2 | + | 0.85 | = | 66.05 |
| AM | 1.74 | | 0.32 | | 1.5 |
| SM | 2.69 | | 1.68 | | 2.6 |
| LS | 98.6 | | 2.6 | | 94.0 |

| from furnace flour (feedstock) | | from additive mixture | | clinker weight% | |
|---|---|---|---|---|---|
| SiO$_2$ | 17.92 | + | 4.31 | = | 22.23 |
| Al$_2$O$_3$ | 4.51 | + | 0.62 | = | 5.13 |
| Fe$_2$O$_3$ | 1.48 | + | 1.93 | = | 3.41 |
| CaO | 63.43 | + | 2.89 | = | 66.32 |
| AM | 3.05 | | 0.32 | | 1.5 |
| SM | 2.99 | | 1.68 | | 2.6 |
| LS | 112.3 | | 20.6 | | 94.0 |

As a result of the above composition of the clinker produced with the additive mixture the value of the silicate modulus, the aluminate modulus and the lime standard is the same as the values of the clinker made from furnace flour (feedstock), that is

| SM | 2.60 weight% |
|---|---|
| AM | 1.50 weight% |
| LS | 94.0 weight%. |

It can also be seen that a furnace flour of a changed composition can be produced by using an appropriate raw base material.

The additive mixture is produced separately from the clinker-burning furnace. If the additive mixture contains soluble or corrosive acid, it must be neutralized before mixing. The additive mixture is stored in a covered space with a watertight concrete bottom. From the feeding bunker the additive mixture is forwarded on a conveyor belt through a belt weighing machine into the heat exchanger building. Finally, at the furnace gates the additive is fed into the furnace through a cellular feeder and a conveying screw, where it is mixed with 850 °C furnace flour, it moves in the furnace into the clinkering zone where it is converted into clinker at a temperature of about 1,450 °C. At the place where the additive is added, the temperature of the flue-gases leaving the furnace is 1,050-1,150 °C, and the gases released from the additive mixture stay on the section where the temperature is higher than 850 °C for at least 3 seconds.

## Claims

1. Additive mixture for cement clinker production consisting of a mixture of slag formed in the course of producing pig iron or production of converter steel and hydrocarbon based wastes deriving from mineral oil industry or materials containing such wastes of a maximum grain size of 20 mm, in a quantity and proportion adaptable to the raw material matrix of cement clinker.

2. Additive mixture as in claim 1, **characterized by** that it contains 40-98 weight% of slag formed in the course of producing pig iron and steel, 2-60 weight% of waste of mineral oil industry origin or material containing such waste and 0-5 weight% of conditioning agent.

3. Additive mixture as in claim 1, **characterized by** that the chemical composition of the burning residue is the following:

| SiO$_2$ | 10-60 weight% |
|---|---|

Table continued

| Al$_2$O$_3$ | 2-20 weight% |
| Fe$_2$O$_3$ | 10-60 weight% |
| CaO | 15-70 weight% |

**4.** Additive mixture as in claim 1, **characterized by** that the wastes deriving from crude oil refining may be acid resin and wastes deriving from natural gas cleaning and from the pyrolytic treatment of mineral carbon, among others sludge deriving from operating and maintaining activity, synthetic insulating and heat-conducting oil, oil wastes, wastes deriving from sand removal in a desander, solid materials and sludge deriving from oil or water separators, or grease and oil mixture, wastes deriving from cleaning transportation and storage tanks containing oil, tank bottom sludge, adsorption clay with mineral oil content, acidic and other tar and types of tar, wastes deriving from organic chemistry processes, building and demolition wastes, asphalt with or without tar content, distillation residues and reaction residues or materials containing such wastes.

**5.** Additive mixture as in claim 1, **characterized by** including conditioning agents adapted to use as suitable feeding consistency of metallurgical slag and wastes deriving from mineral oil industry may be packaging materials, impregnating materials, wipe cloths, filter materials and protective clothing, wood such as polluted sawdust or cuttings, paper and cardboard, composite packaging materials of various compositions, wastes deriving from the research, mining, enrichment and other processing of minerals and from quarrying, wastes deriving from waste processing facilities, sewage plants and water supply industry, exhausted catalytic converters, used activated carbon, excavated soil and stone waste, filter cakes, charged or discharged ion-exchange resin.

**6.** Additive mixture as in claim 1, **characterized by** that the soluble acid content of hydrocarbon-based wastes deriving from mineral oil industry is neutralized.

**7.** Use of the additive mixture claimed in Claims 1 to 6 by feeding this in the cement clinker burning furnace at the temperature section 1,050-1,150 °C in a weight% of 1 to 15 calculated on the weight of the clinker.

**8.** Use as in claim 7, **characterized by** that the feeding is realized through a cellular feeder or conveying screw.

**Revendications**

**1.** Mélange d'additifs pour la production de clinker de ciment, constitué par un mélange de laitier obtenu au cours de la production de fonte de première fusion ou de la production d'acier au convertisseur et de déchets à base d'hydrocarbures dérivant de l'industrie d'huile minérale ou de matières contenant de tels déchets, dont la granulométrie maximale s'élève à 20 mm, en une quantité et en une proportion qui peuvent être adaptées à la matrice de matière brute de clinker de ciment.

**2.** Mélange d'additifs selon la revendication 1, **caractérisé en ce qu'**il contient, à concurrence de 40 à 98 % en poids, du laitier que l'on obtient au cours de la production de fonte de première fusion et d'acier, à concurrence de 2 à 60 % en poids, des déchets provenant de l'industrie d'huile minérale ou des matières contenant de tels déchets et, à concurrence de 0 à 5 % en poids, d'agent de conditionnement.

**3.** Mélange d'additifs selon la revendication 1, **caractérisé en ce que** la composition chimique du résidu de brûlage est la suivante :

| SiO$_2$ | 10-60 % en poids |
| Al$_2$O$_3$ | 2-20 % en poids |
| Fe$_2$O$_3$ | 10-60 % en poids |
| CaO | 15-70 % en poids. |

**4.** Mélange d'additifs selon la revendication 1, **caractérisé en ce que** les déchets dérivant du raffinage du pétrole brut peuvent représenter une résine acide et des déchets dérivant de l'épuration du gaz naturel et du traitement pyrolytique du carbone minéral, entre autres des boues dérivant d'activités de fonctionnement et de maintenance, des huiles synthétiques isolantes et de transfert de chaleur, des déchets d'huile, des déchets dérivant d'élimination du sable dans un dessableur, des matières solides et des boues dérivant de séparateurs d'huile ou d'eau, ou encore des mélanges de graisses et d'huiles, des déchets dérivant de l'épuration de cuves de transport et de stockage contenant de l'huile, des boues de résidus de réservoirs, des argiles d'adsorption contenant de l'huile minérale, des goudrons acides et analogues, ainsi que d'autres types de goudrons, des déchets dérivant de procédés de chimie organique, des déchets de construction et de démolition, de l'asphalte en présence ou en l'absence de goudron, des déchets de distillations et des déchets de réactions ou encore des matières contenant de tels déchets.

5. Mélange d'additifs selon la revendication 1, **caractérisé en ce qu'**il englobe des agents de conditionnement conçus pour une utilisation permettant d'obtenir une consistance d'alimentation appropriée de laitiers métallurgiques et de déchets dérivant de l'industrie d'huile minérale, lesdits agents pouvant représenter des matières d'emballage, des matières d'imprégnation, des tissus d'essuyage, des matières filtrantes et des vêtements de protection, du bois tel que de la sciure et des copeaux pollués, du papier et du carton, des matières d'emballage composites de diverses compositions, les déchets dérivant de la prospection, de l'exploitation, de l'enrichissement et d'autres traitements de matières minérales et de l'exploitation de carrières, des déchets dérivant d'équipements de traitement des déchets, de stations d'épuration des eaux usées et de l'industrie d'alimentation en eau, de convertisseurs catalytiques épuisés, de charbon activé utilisé, de déchets de pierres et de déblais, de gâteaux de filtres, de résines échangeuses d'ions, chargées ou déchargées.

6. Mélange d'additifs selon la revendication 1, **caractérisé en ce que** la teneur en acide soluble de déchets à base d'hydrocarbures dérivant de l'industrie d'huile minérale est neutralisée.

7. Utilisation du mélange d'additifs selon les revendications 1 à 6, par alimentation dudit mélange dans le four de brûlage de clinker de ciment dans la section dans laquelle règne une température de 1050 à 1150 °C dans un pourcentage en poids de 1 à 15, calculé par rapport au poids du clinker.

8. Utilisation selon la revendication 7, **caractérisé en ce que** l'alimentation est mise en oeuvre via un dispositif d'alimentation alvéolaire ou via une vis transporteuse.

## Patentansprüche

1. Zusatzgemisch für die Herstellung von Zementklinker, bestehend aus einem Gemisch aus Schlacke, die bei der Herstellung von Roheisen oder von Konverterstahl gebildet wurde, und Abfällen auf Kohlenwasserstoffbasis aus der Mineralölindustrie oder Stoffen, die solche Abfälle enthalten, mit einer maximalen Korngröße von 20 mm in einer Menge und einem Anteil, der für die Rohmaterialgrundmasse des Zementklinkers geeignet ist.

2. Zusatzgemisch nach Anspruch 1, **dadurch gekennzeichnet, dass** es 40-98 Gew.-% bei der Roheisen- und Stahlherstellung gebildete Schlacke, 2-60 Gew.-% Abfallstoffe der Mineralölindustrie oder derartige Abfallstoffe enthaltendes Material und 0-5 Gew.-% Konditionierungsmittel enthält.

3. Zusatzgemisch nach Anspruch 1, **dadurch gekennzeichnet, dass** der Verbrennungsrückstand folgende chemische Zusammensetzung aufweist:

| | |
|---|---|
| $SiO_2$ | 10-60 Gew.-% |
| $Al_2O_3$ | 2-20 Gew.-% |
| $Fe_2O_3$ | 10-60 Gew.-% |
| CaO | 15-70 Gew.-%. |

4. Zusatzgemisch nach Anspruch 1, **dadurch gekennzeichnet, dass** die aus der Rohölraffinierung stammenden Abfallstoffe Säureharz und die aus der Erdgasreinigung und der Pyrolysebehandlung von Graphit stammenden Abfallstoffe, darunter auch Schlamm aus der Inbetriebhaltungs- und Instandhaltungsaktivität, synthetisches Isolieröl und wärmeleitendes Öl, Ölabfallstoffe, Abfallstoffe aus der Sandbeseitigung in einem Entsander, Feststoffe und Schlamm aus Öl- oder Wasserabscheidern oder Schmiermittel und Ölgemische, Abfallstoffe aus Öl enthaltenden Reinigungstransport- und Lagerbehältern, Behälterbodenschlamm, Adsorptionston mit Mineralölgehalt, saure und andere Teere, Abfallstoffe aus Prozessen der organischen Chemie, Bau- und Abbruchabfallstoffe, Asphalt mit oder ohne Teergehalt, Destillationsrückstände und Reaktionsrückstände oder Stoffe, die derartige Abfallstoffe enthalten, sein können.

5. Zusatzgemisch nach Anspruch 1, **dadurch gekennzeichnet, dass** es Konditionierungsmittel enthält, die für eine entsprechende Aufgabekonsistenz der Hüttenschlacke verwendet werden können, und Abfallstoffe aus der Mineralölindustrie wie Verpackungsmaterial, Imprägniermittel, Wischtücher, Filterstoffe und Schutzkleidung, Holz wie verunreinigtes Sägemehl oder verunreinigte Holzschnitzel, Papier und Karton, Verbundverpackungsmaterial unterschiedlicher Zusammensetzung, Abfallstoffe aus Forschung, Bergbau, Anreicherung, und anderen Prozessen zur Verarbeitung von Mineralien und aus dem Steinbruchabbau, Abfallstoffe aus Abfallverarbeitungsanlagen, Klär- und aus Wasserversorgungsanlagen, erschöpften Katalysekonvertern, verbrauchte Aktivkohle, Aushub und Steinabfallstoffe, Filterkuchen, aufgeladene oder entladene Ionenaustauschharze.

6. Zusatzgemisch nach Anspruch 1, **dadurch gekennzeichnet, dass** der lösliche Säuregehalt von Abfallstoffen auf Kohlenwasserstoffbasis, die aus der Mineralölindustrie stammen, neutralisiert wird.

7. Verwendung des Zusatzgemisches nach einem der Ansprüche 1 bis 6 durch Aufgabe auf einen Zementklinkerbrennofen in einem Temperaturbereich von 1.050-1.150°C bei einem Gewichtsprozentanteil von 1 bis 15, bezogen auf das Gewicht des Klinkers.

8. Verwendung nach Anspruch 7, **dadurch gekennzeichnet, dass** die Aufgabe des Gemisches mit Hilfe eines Zellenzuteilers bzw. mit einer Förderschnecke erfolgt.